# EUROPÄISCHE PATENTANMELDUNG

(11) **EP 3 843 006 A1**
(43) Veröffentlichungstag der Anmeldung: **30.06.2021**
(21) Anmeldenummer: 19219349.8
(22) Anmeldetag: 23.12.2019
(51) Int. Cl.: G06K 9/62

(54) **VERFAHREN UND SYSTEM ZUM KLASSIFIZIEREN EINER SCHWEISSNAHT**

(71) Anmelder: Fronius International GmbH, 4643 Pettenbach (AT)
(72) Erfinder: Weingartner, Michael, 4643 Pettenbach (AT); Wittmann, Manfred, 4643 Pettenbach (AT)
(74) Vertreter: Isarpatent

(57) **Zusammenfassung**

Ein System zur Klassifizierung einer Schweißnaht mit mindestens einer Datenquelle zur Bereitstellung von Schweißnahtdaten der Schweißnaht und mit mindestens einem trainierten künstlichen Intelligenz-Modul, das die Schweißnaht anhand der bereitgestellten Schweißnahtdaten automatisch klassifiziert.

## Beschreibung

Die Erfindung betrifft ein Verfahren und ein System zur Klassifizierung einer Schweißnaht sowie ein Verfahren zum Generieren von Trainingsdaten, die zum Trainieren eines künstlichen Intelligenz-Moduls nutzbar sind, das geeignet ist, Schweißnahtdaten automatisch zu klassifizieren.

Bei einem Schweißprozess entsteht eine Schweißverbindung. Beim Schweißen werden Bauteile bzw. Werkstücke unter Anwendung von Wärme und/oder Druck, mit oder ohne Schweißzusatzwerkstoffe unlösbar miteinander verbunden. Bei unterschiedlichen Schweißprozessen sowie unterschiedlichen Grund- und Zusatzwerkstoffen können unterschiedliche Schweißnahtunregelmäßigkeiten auftreten. Je nach der Art, wie Bauteile zusammengefügt werden, entstehen beim Schweißen Schweißnähte mit unterschiedlichen Nahtformen, insbesondere Stumpfnahtverbindungen und Kehlnahtverbindungen.

Zur Sicherstellung einer ausreichenden Qualität der hergestellten Schweißverbindung kann eine Sichtprüfung der Schweißverbindung erfolgen. Die Sichtprüfung kann vor, während und nach dem Schweißvorgang durchgeführt werden. Darüber hinaus können Schweißparameter während des Schweißprozesses aufgezeichnet werden. Neben der visuellen Prüfung der hergestellten Schweißnaht können auch Testprozesse ausgeführt werden, beispielsweise Tests hinsichtlich der Härte und Biegefestigkeit des hergestellten Bauteils. Bei der Schweißnahtprüfung können verschiedene Techniken zum Einsatz kommen, beispielsweise auch die Untersuchung von Schweißnahtschliffen auf Makro- und Mikroebene. Die verschiedenen Vorgänge zur Schweißnahtprüfung, insbesondere Sichtprüfungen, erfolgen herkömmlicherweise weitestgehend stichprobenartig mit einem geringen Grad an Automatisierung. Die Schweißnahtqualitätsprüfung ist demzufolge bei herkömmlichen Systemen relativ zeitaufwendig und ungenau. Die herkömmliche Vorgehensweise zur Klassifizierung von Schweißnähten beruht zudem weitestgehend auf einer subjektiven Einschätzung durch den jeweiligen Qualitätsprüfer. Hierdurch leidet auch die Vergleichbarkeit von Schweißnahtqualitätsergebnissen verschiedener Schweißprozesse untereinander.

Es ist daher eine Aufgabe der vorliegenden Erfindung, ein Verfahren und ein System zur Klassifizierung einer Schweißnaht zu schaffen, welches die oben genannten Nachteile vermeidet und eine zuverlässige, objektivierte und weitestgehend automatische Klassifizierung einer Schweißnaht erlaubt.

Diese Aufgabe wird erfindungsgemäß durch ein System mit den in Patentanspruch 1 angegebenen Merkmalen gelöst.

Die Erfindung schafft demnach ein System zur Klassifizierung einer Schweißnaht mit mindestens einer Datenquelle zur Bereitstellung von Schweißnahtdaten der Schweißnaht und mit mindestens einem trainierten künstlichen Intelligenz-Modul, das die Schweißnaht anhand der bereitgestellten Schweißnahtdaten automatisch klassifiziert.

Die Erfindung schafft ferner gemäß einem weiteren Aspekt ein Verfahren zum Generieren von Trainingsdaten, die zum Trainieren eines künstlichen Intelligenz-Moduls des erfindungsgemäßen Klassifizierungssystems nutzbar sind, wobei das Verfahren zum Generieren von Trainingsdaten insbesondere die folgenden Schritte aufweist:
Ausgeben von Schweißnahtdaten mittels einer Nutzerschnittstelle an einen Nutzer,
Versehen der ausgegebenen Schweißnahtdaten durch den Nutzer mit Tags und
Speichern der mit Tags versehenen Schweißnahtdaten in einem Datenspeicher bzw. einer Datenbank.

Bei einer bevorzugten Ausführungsform des erfindungsgemäßen Systems weist das künstliche Intelligenz-Modul mindestens ein trainiertes neuronales Netzwerk auf. Bei dem trainierten neuronalen Netzwerk handelt es sich insbesondere um ein CNN und/oder RNN. Dies erlaubt eine effiziente Implementierung auf einer Recheneinheit des Systems.

Die zu klassifizierende Schweißnaht wird vorzugsweise durch ein Schweißgerät des Systems in einem Schweißvorgang hergestellt. Bei einer möglichen Ausführungsform wird das erfindungsgemäße Klassifizierungssystem zur Klassifizierung der Schweißnaht an das Schweißgerät angebunden bzw. in das Schweißgerät integriert. Die Klassifizierung erfolgt bei einer bevorzugten Ausführungsform schon während der Herstellung der Schweißnaht, insbesondere auf Basis von Schweißnahtoberflächenbildern, die durch eine Kamera generiert werden.

Das erfindungsgemäße System zur Klassifizierung einer Schweißnaht zeichnet sich insbesondere dadurch aus, dass es vorzugsweise mehrere unterschiedliche Datenquellen zur Bereitstellung unterschiedlicher Schweißnahtartefakte umfasst.

Die beim Training des künstlichen Intelligenz-Moduls herangezogenen Schweißnahtdaten umfassen vorzugsweise Schweißnahtbilder. Bei einer bevorzugten Ausführungsform des erfindungsgemäßen Klassifizierungssystems werden sowohl Schweißnahtoberflächenbilder bzw. Kamerabilder, SNOB, als auch Schweißnahtschliffbilder, SSNB, als Schweißnahtartefakte bzw. Schweißnahtdaten zur Klassifizierung herangezogen.

Bei einer weiteren möglichen Ausführungsform des erfindungsgemäßen Klassifizierungssystems umfassen die Schweißnahtdaten nicht nur einzelne Schweißnahtbilder, sondern Schweißnahtbildsequenzen bzw. Videosequenzen.

Bei einer weiteren möglichen Ausführungsform des erfindungsgemäßen Klassifizierungssystems weisen die Schweißnahtdaten auch akustische Schweißaufnahmen auf, die mittels eines Mikrophons aufgezeichnet werden.

Bei einer weiteren möglichen Ausführungsform des erfindungsgemäßen Klassifizierungssystems zur Klassifizierung einer Schweißnaht werden als Schweißnahtdaten auch Schweißnahtdokumente, insbesondere Textdokumente, verwendet.

Das erfindungsgemäße Klassifizierungssystem zur Klassifizierung einer Schweißnaht weist als Datenquelle bei einer möglichen Ausführungsform einen Bildsensor auf, welcher Schweißnahtbilder oder Schweißnahtbildsequenzen einer zu klassifizierenden Schweißnaht während eines Schweißvorganges als Schweißnahtdaten liefert.

Bei einer weiteren möglichen Ausführungsform des erfindungsgemäßen Klassifizierungssystems weist dieses als Datenquelle einen akustischen Sensor auf, der während eines Schweißvorganges erfasste akustische Schweißaufnahmen als Schweißnahtdaten bereitstellt.

Bei einer weiteren möglichen Ausführungsform des erfindungsgemäßen Klassifizierungssystems weist das System ferner als Datenquelle einen Datenspeicher auf, der gespeicherte Schweißnahtoberflächenbilder, Schweißnahtschliffbilder, Schweißnahtbildsequenzen, akustische Schweißaufnahmen und/oder Schweißnahtdokumente dem künstlichen Intelligenz-Modul als Schweißnahtdaten zur Klassifizierung einer Schweißnaht bereitstellt, die in einem Schweißvorgang hergestellt wird.

Bei einer möglichen Ausführungsform erfolgt die Klassifizierung der hergestellten Schweißnaht nach Abschluss des Schweißvorganges.

Bei einer alternativen Ausführungsform des erfindungsgemäßen Klassifizierungssystems erfolgt die Klassifizierung der hergestellten Schweißnaht bereits während des Schweißprozesses bzw. Schweißvorganges.

Die durch ein Schweißgerät hergestellte Schweißnaht wird anhand der bereitgestellten Schweißnahtdaten der Schweißnaht durch das künstliche Intelligenz-Modul vorzugsweise während und/oder nach Abschluss eines Schweißprozesses automatisch als fehlerfrei oder fehlerbehaftet klassifiziert.

Bei einer weiteren möglichen Ausführungsform des erfindungsgemäßen Klassifizierungssystems wird ein Schweißprozess zur Herstellung der Schweißnaht durch eine Steuerung des Schweißgerätes in Abhängigkeit des von dem künstlichen Intelligenz-Modul ausgegebenen Klassifizierungsergebnisses hinsichtlich der Schweißnaht automatisch gesteuert.

Bei einer weiteren möglichen Ausführungsform des erfindungsgemäßen Systems weisen die Schweißnahtdaten Schweißnahtbilder auf, welche eine Oberfläche der Schweißnaht und/oder mindestens einen Querschnitt durch eine geschliffene Schweißnaht darstellen.

Bei einer bevorzugten Ausführungsform des erfindungsgemäßen Systems wird das künstliche Intelligenz-Modul auf Basis einer Vielzahl unterschiedlicher Schweißnahtdaten in einem Maschinenlernprozess trainiert.

Die Datenquellen des erfindungsgemäßen Systems liefern Schweißnahtdaten, die vorzugsweise in einer zentralen Datenbank des Systems gespeichert werden und zum Trainieren des künstlichen Intelligenz-Moduls aus der Datenbank ausgelesen werden.

Bei einer weiteren möglichen Ausführungsform des erfindungsgemäßen Systems werden die Schweißnahtdaten durch einen Nutzer mittels einer Nutzerschnittstelle des Systems mit Tags versehen und die entsprechend markierten Schweißnahtdaten werden anschließend in einer Datenbank des Systems zum Trainieren des künstlichen Intelligenz-Moduls gespeichert.

Bei einer bevorzugten Ausführungsform des erfindungsgemäßen Systems erfolgt das Taggen der Schweißnahtdaten in einem Login- oder Registriervorgang, indem sich der Nutzer über die Nutzerschnittstelle bei dem System anmeldet. Hierdurch kann ein separater aufwendiger Tagging-Prozess vermieden werden und getaggte Daten als Nebenprodukt eines sowieso stattfindenden Login- und Registriervorganges generiert werden.

Bei einer weiteren möglichen Ausführungsform des erfindungsgemäßen Systems weisen die Schweißnahtdaten jeweils mehrere Segmente auf, die über die Nutzerschnittstelle des Systems an den Nutzer optisch und/oder akustisch ausgegeben werden.

Bei dem erfindungsgemäßen System erfolgt das Taggen der Schweißnahtdaten vorzugsweise, indem diejenigen Segmente der ausgegebenen Schweißnahtdaten, die eine oder mehrere vorgegebene bzw. abgefragte Eigenschaften der Schweißnaht widerspiegeln, mittels der Nutzerschnittstelle durch den Nutzer selektiert werden.

Diese Eigenschaften können beispielsweise Unregelmäßigkeiten der Schweißnaht umfassen.

Bei einer weiteren möglichen Ausführungsform des erfindungsgemäßen Systems werden Segmente der ausgegebenen Schweißnahtdaten anhand vorhandener Schweißfehlerstellen, Schweißnahtformfehler, auftretender Schweißspritzer, Spaltmaßfehler und/oder anhand eingestellter Schweißparameter selektiert.

Bei einer bevorzugten Ausführungsform des erfindungsgemäßen Systems werden die seitens eines Nutzers an den ausgegebenen Segmenten vorgenommenen Selektionen zur Einstufung einer Schweißer-Qualifizierung des Nutzers durch eine Nutzer-Einstufungseinheit des Systems automatisch ausgewertet.

Dies erlaubt es, zusätzlich die Qualifizierung eines Nutzers hinsichtlich seiner Schweißfähigkeiten zu ermitteln und bei der weiteren Steuerung des Schweißprozesses mitzuberücksichtigen.

Bei einer weiteren möglichen Ausführungsform des erfindungsgemäßen Systems werden die Schweißfunktionen eines Schweißgerätes durch eine Steuerung des Schweißgerätes entsprechend der durch die Nutzer-Einstufungseinheit vorgenommenen Einstufung des Nutzers für den entsprechenden Nutzer automatisch freigegeben oder gesperrt.

Für als hochqualifiziert eingestufte Nutzer werden vorzugsweise zusätzliche Schweißfunktionen freigegeben.

Für als gering qualifiziert eingestufte Nutzer werden vorzugsweise Schweißfunktionen, insbesondere sicherheitskritische Schweißfunktionen, gesperrt.

Bei einer möglichen Ausführungsform des erfindungsgemäßen Systems erfolgt das Taggen eines auf einer Anzeige der Nutzerschnittstelle angezeigten Schweißnahtbildes seitens des Nutzers mittels Spracheingabe in einen akustischen Sensor bzw. Mikrophon der Nutzerschnittstelle.

Die Erfindung schafft gemäß einem weiteren Aspekt ein Verfahren zum Klassifizieren einer Schweißnaht mit den in Patentanspruch 17 angegebenen Merkmalen.

Die Erfindung schafft demnach ein Verfahren zum Klassifizieren einer Schweißnaht mit den Schritten:
Bereitstellen von Schweißnahtdaten der zu klassifizierenden Schweißnaht, die während eines Schweißvorganges erzeugt werden,
Klassifizieren der Schweißnaht durch ein trainiertes künstliches Intelligenz-Modul anhand der bereitgestellten Schweißnahtdaten.

Da Schweißnahtoberflächenbilder (im Gegensatz zu Schweißschliffbildern bzw. Querschnittsbildern) bereits während des Schweißvorganges bzw. Schweißprozesses zur Herstellung der Schweißnaht durch eine Kamera als Datenquelle erzeugt werden können, ist es bei dem erfindungsgemäßen Verfahren möglich, die Klassifizierung der Schweißnaht in Echtzeit bereits während des Schweißvorganges zu starten bzw. auszuführen.

Die Klassifizierung der Schweißnaht durch das trainierte künstliche Intelligenz-Modul kann auch anhand von gespeicherten Schweißnahtdaten erfolgen.

Die Erfindung schafft ferner gemäß einem weiteren Aspekt ein Verfahren zum Generieren von Trainingsdaten.

Die Erfindung schafft demnach ein Verfahren zum Generieren von Trainingsdaten, die zum Trainieren eines künstlichen Intelligenz-Moduls nutzbar sind, mit den Schritten:
Ausgeben von Schweißnahtdaten mittels einer Nutzerschnittstelle an einen Nutzer,
Versehen der ausgegebenen Schweißnahtdaten mit Tags und Speichern der mit Tags versehenen Schweißnahtdaten in einer Datenbank.

Dabei erfolgt das Taggen der Schweißnahtartefakte vorzugsweise in einem Login- oder Registriervorgang, indem sich der Nutzer über die Nutzerschnittstelle bei dem System anmeldet.

Im Weiteren werden mögliche Ausführungsformen des erfindungsgemäßen Verfahrens und Systems zum Klassifizieren von Schweißnähten unter Bezugnahme auf die beigefügten Figuren näher erläutert.

Es zeigen:
- Fig. 1: eine schematische Darstellung zur Erläuterung der Generation von Trainingsdaten für das erfindungsgemäße Klassifizierungssystem;
- Fig. 2: eine weitere schematische Darstellung zur Erläuterung der Funktionsweise des erfindungsgemäßen Klassifizierungssystems;
- Fig. 3: ein Blockschaltbild einer möglichen Ausführungsform des erfindungsgemäßen Klassifizierungssystems;
- Fig. 4: ein Ablaufdiagram einer möglichen Ausführungsform eines erfindungsgemäßen Verfahrens zum Klassifizieren einer Schweißnaht;
- Fig. 5: ein weiteres Ablaufdiagramm einer möglichen Ausführungsform eines erfindungsgemäßen Verfahrens zum Generieren von Trainingsdaten für ein erfindungsgemäßes Klassifizierungssystem;
- Fig. 6: zeigt ein mögliches Beispiel zum Taggen eines segmentierten Schweißnahtartefakts.

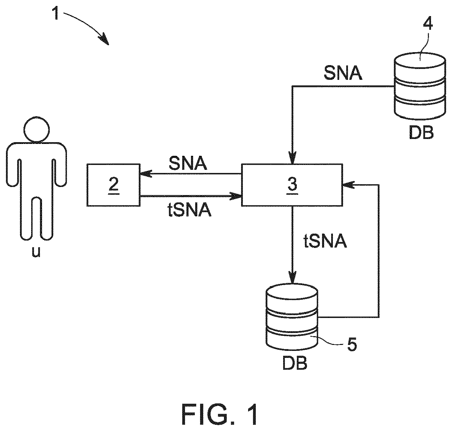

Fig. 1 zeigt schematisch ein Ausführungsbeispiel für ein erfindungsgemäßes System 1 zur Klassifizierung einer Schweißnaht SN. Fig. 1 illustriert die Erzeugung von Trainingsdaten, die zum Trainieren eines künstlichen Intelligenz-Moduls 6 des Systems 1 nutzbar sind. Das System 1 zur Klassifizierung einer Schweißnaht SN, wie es in Fig. 1 dargestellt ist, weist mindestens eine Nutzerschnittstelle 2 auf, die mit einem Modul 3 des Systems 1 verbunden ist. Eine Datenbank des Systems 1 kann eine zentrale Datenbank DB aufweisen oder verteilte Datenbanken 4, 5 umfassen, wie in Fig. 1 angedeutet. Wie in Fig. 1 schematisch dargestellt, erhält das Modul 3 Schweißnahtdaten SND aus einem Archiv, welche in einer Datenbank 4A gespeichert sind, die über die Nutzerschnittstelle 2 an einen Nutzer U bzw. Schweißer ausgegeben werden. Über die Nutzerschnittstelle 2 werden sowohl getaggte als auch ungetaggte Schweißnahtartefakte ausgegeben. Schweißnahtartefakte umfassen Schweißnahtdaten SND. Diese Schweißnahtdaten SND sind strukturiert und weisen einen oder mehrere Datensätze auf. Ein Datensatz umfasst beispielsweise ein oder mehrere Schweißnahtbilder SNB. Ein Datensatz kann aber auch beispielsweise eine oder mehrere akustische Schweißaufnahmen umfassen. -Einer oder mehrere Nutzer bzw. Schweißer taggen die ausgegebenen Schweißnahtdaten SND, die von dem Modul 3 anschließend in getaggter Form in einer Datenbank 4B des Systems 1 abgelegt werden. Bei einer möglichen Ausführungsform werden die getaggten Schweißnahtdaten tSND auch in der ursprünglichen Datenbank abgelegt. Die Schweißnahtdaten SND werden durch den Nutzer U mittels seiner Nutzerschnittstelle 2 mit Tags T versehen und die entsprechend markierten/getaggten Schweißnahtdaten tSND werden in der Datenbank 5 des Systems 1 zum Trainieren eines künstlichen Intelligenz-Moduls 6 gespeichert bzw. zwischengespeichert. Das Taggen der Schweißnahtdaten SND erfolgt vorzugsweise in einem Login- oder Registriervorgang, bei dem sich der Nutzer bzw. Schweißer U über die Nutzerschnittstelle 2 bei dem System 1 anmeldet. Schweißnahtdaten SND werden vorzugsweise von mehreren Nutzern U getaggt. Nutzer haben die Möglichkeit, sowohl ungetaggte Schweißnahtdaten SND als auch von ihnen bereits getaggte Schweißnahtdaten tSND zum Taggen durch andere Nutzer in eine Datenbank 4 des Systems 1 hochzuladen. Der Nutzer U ist eine natürliche Person, d.h. insbesondere kein Roboter.

Ungetaggte Schweißnahtdaten SND, die aus der Datenbank 4 ausgelesen werden, weisen vorzugsweise Schweißnahtbilder SNB von Schweißnähten SN auf. Diese Schweißnahtbilder SNB umfassen einerseits Schweißnahtoberflächenbilder SNOB und/oder andererseits Schweißnahtschliffbilder SNSB. Die Schweißnahtoberflächenbilder SNOB können durch Kameras bzw. optische Sensoren während und/oder nach Abschluss des Schweißvorganges zur Herstellung der Schweißnaht SN erzeugt werden. Die Schweißnahtschliffbilder SNSB zeigen einen Querschnitt durch eine bereits hergestellte und anschließend geschliffene Schweißnaht SN. Schweißnahtschliffbilder SNSB können erst nach Abschluss des Schweißvorganges zur Herstellung der Schweißnaht SN erzeugt werden.

Ein makroskopisches Schweißnahtschliffbild SNSB zeigt einen Querschnitt durch eine Schweißnaht bzw. Schweißverbindung, der mittels Trennen, Grob- oder Reinschleifen erhalten wird. Die dabei erhaltene Oberfläche kann geätzt werden, bevor ein Schweißnahtschliffbild SNSB mit einer Kamera bzw. einer optischen Sensoreinheit generiert wird. Schweißnahtschliffbilder SNSB auf Makroebene zeigen die Schweißnahtgeometrie sowie weitere Merkmale, insbesondere die Anzahl und Größe von Schweißlagen, Eindringtiefen oder die Größe von Wärmeeinflusszonen. Schweißnahtschliffbilder SNSB auf Mikroebene, die mithilfe eines Lichtmikroskops generiert werden, zeigen Schweißnahtauffälligkeiten bzw. Schweißdefekte, insbesondere Hohlräume, Phasenübergänge oder Korngrößen.

Eine hergestellte Schweißnaht SN kann unterschiedliche Unregelmäßigkeiten aufweisen, insbesondere Risse, Hohlräume, feste Einschlüsse, Bindefehler, Form- und Maßabweichungen sowie sonstige Unregelmäßigkeiten. Weiterhin können die verschiedenen Unregelmäßigkeiten Unterklassen aufweisen. Beispielsweise umfassen Risse einer Schweißnaht SN Längsrisse, Querrisse, sternförmige Risse oder Endkraterrisse. Unterschiedliche Ursachen können für die Entstehung unterschiedlicher Typen von Rissen in Schweißnähten SN in Frage kommen. Auch für das Entstehen von Poren in Schweißnähten SN bestehen unterschiedliche Ursachen, beispielsweise unzureichender Gasschutz beim Schutzgasschweißen oder eine falsche Brennerführung. Andere Ursachen für die Entstehung von Poren in Schweißnähten SN sind beispielsweise auftretende Feuchtigkeit, bestehende Verunreinigungen an dem Bauteil oder an dem Zusatzwerkstoff oder beispielsweise Oxidschichten beim Schweißen von Aluminium. Weitere mögliche Unregelmäßigkeiten umfassen beispielsweise Bindefehler oder ungenügende Durchschweißungen, die insbesondere durch mangelnde Fähigkeiten des Schweißers U oder durch eine falsche Einstellung von Schweißparametern hervorgerufen werden können. Weitere mögliche Unregelmäßigkeiten der hergestellten Schweißnaht SN sind auftretende Schweißspritzer. Einige der Schweißnahtunregelmäßigkeiten bzw. Schweißnahtfehler sind auf Schweißnahtoberflächenbildern SNOB erkennbar, während andere Schweißnahtunregelmäßigkeiten allein auf Schweißnahtschliffbildern SNSB erkennbar sind. Bei einer bevorzugten Ausführungsform des erfindungsgemäßen Klassifizierungsverfahrens werden demnach sowohl Schweißnahtoberflächenbilder SNOB als auch SNSB Schweißnahtschliffbilder zum Trainieren des künstlichen Intelligenz-Moduls 6 des Systems 1 herangezogen. Bei einer bevorzugten Ausführungsform umfassen die Schweißnahtdaten SND, welche über die Schnittstelle 2 an den Nutzer U ausgegeben werden, nicht nur Einzelbilder von Schweißnähten SN, sondern auch Bildsequenzen bzw. Videoaufnahmen von Schweißnähten SN. Bei einer weiteren möglichen Ausführungsform des erfindungsgemäßen Systems 1 umfassen die an den Nutzer U ausgegebenen Schweißnahtdaten SND auch akustische Schweißaufnahmen bzw. Sounddateien, die während eines Schweißprozesses mithilfe eines akustischen Sensors bzw. Mikrophons aufgezeichnet und in der Datenbank 4 abgelegt wurden. Weiterhin umfassen die an den Nutzer U über die Nutzerschnittstelle 2 ausgegebenen Schweißnahtdaten SND vorzugsweise Schweißnahtdokumente (WPS usw.).

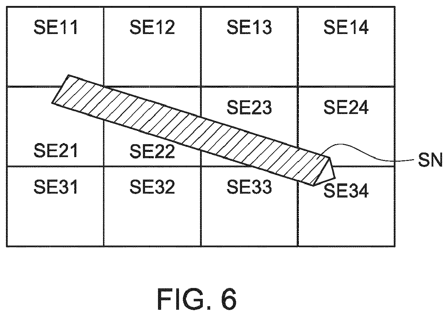

Das Taggen der Schweißnahtdaten SND erfolgt bei einer möglichen Ausführungsform während eines Login- oder Registriervorganges, bei dem sich der Nutzer bzw. Schweißer über die Nutzerschnittstelle 2 bei dem System 1 anmeldet. Hierdurch kann erreicht werden, dass ein umfangreicher Trainingsdatensatz TDS durch die verschiedenen Nutzer bzw. Schweißer U, die sich an dem System 1 anmelden und dieses nutzen, erzeugt bzw. generiert wird. Dieser generierte Trainingsdatensatz TDS kann in einen Zwischenspeicher 5 des Systems 1 geschrieben werden. Bei einer möglichen Ausführungsform weisen die Schweißnahtdaten SND jeweils mehrere Segmente SE auf, die über die Nutzerschnittstelle 2 des Systems 1 an den Nutzer bzw. Schweißer U optisch und/oder akustisch ausgegeben werden. Das Taggen der Schweißnahtdaten SND erfolgt, indem diejenigen Segmente SE des ausgegebenen Schweißnahtartefakts bzw. Schweißnahtdatensatzes, die eine oder mehrere Eigenschaften der Schweißnaht SN widerspiegeln, mittels der Nutzerschnittstelle 2 durch den Nutzer U selektiert werden. Beispielsweise können Segmente SE der ausgegebenen Schweißnahtdaten SND anhand vorhandener Schweißnahtfehlerstellen, Schweißnahtformfehlern, aufgetretener Schweißspritzer, Spaltmaßfehler und/oder anhand eingestellter Schweißparameter seitens des Nutzers U zum Taggen der ausgegebenen Schweißnahtdaten SND selektiert werden. Beispielsweise kann ein zweidimensionales Schweißnahtbild SNB, insbesondere ein Schweißnahtoberflächenbild SNOB (wie in Fig. 6 gezeigt) und/oder ein Schweißnahtschliffbild SNSB der gleichen Schweißnaht SN, in gleich große Bildsegmente bzw. Sektoren SE unterteilt werden und dem Nutzer bzw. Schweißer U über die Nutzerschnittstelle 2 eine spezifische Frage gestellt werden, wie beispielsweise "Markiere (tagge) alle Segmente auf dem angezeigten Bild, die eine Schweißnaht beinhalten". Wird beispielsweise ein Bild als Datensatz der Schweißnahtdaten SND in zwölf verschiedene Sektoren bzw. Segmente SE unterteilt, wie in Fig. 6 dargestellt, kann für jeden Sektor SE seitens des Nutzers U angegeben werden, ob der jeweilige Sektor SE definitiv eine Schweißnaht SN beinhaltet bzw. definitiv keine Schweißnaht SN beinhaltet. Bei dem in Fig. 6 dargestellten Beispiel beinhalten die Sektoren SE11, SE21, SE22, SE23, SE24, SE33, SE34 Teile einer Schweißnaht SN. Bei einer alternativen Ausführungsform können dem Nutzer bzw. Schweißer U über die Nutzerschnittstelle 2 auch mehrere Bilder mit einer spezifischen Fragestellung angezeigt werden, die jeweils in Sektoren bzw. Segmente SE unterteilt sind. Beispielsweise kann der Nutzer U gebeten werden, diejenigen Bilder SNB zu taggen, die fehlerhafte Schweißnähte SN darstellen. Sofern die angezeigten Bilder SNB segmentiert bzw. in Sektoren SE unterteilt sind, kann der Schweißer bzw. Nutzer U zudem darum ersucht werden, diejenigen Sektoren bzw. Segmente SE zu taggen, welche einen identifizierten oder vorgegebenen Schweißfehler darstellen.

Bei einer möglichen Ausführungsform werden die seitens des Nutzers U bzw. des Schweißers an den ausgegebenen Segmenten SE vorgenommenen Selektionen zur Einstufung einer Schweißer-Qualifizierung des Nutzers U durch eine Nutzer-Einstufungseinheit des Systems 1 automatisch ausgewertet. Dies geschieht vorzugsweise auf Basis eines von einem Experten bereits getaggten Satz von Schweißnahtbildern SNB mit entsprechend markierten Schweißnahtbildsegmenten. Erkennt ein Nutzer U bzw. Schweißer zuverlässig anhand des ihm zur Verfügung gestellten Satzes von Schweißnahtbildern SNB aufgetretene Unregelmäßigkeiten bzw. Schweißnahtfehler in den passenden Sektoren bzw. Segmenten SE, wird seine Fähigkeit bzw. Qualifizierung als Schweißer hoch eingestuft. Ist umgekehrt der Nutzer bzw. Schweißer U nicht in der Lage, insbesondere während eines Login- oder Registriervorganges, zuverlässig Schweißnahtunregelmäßigkeiten bzw. Schweißnahtfehler in dem ausgegebenen Satz von Schweißnahtbildern SNB in den richtigen Segmenten bzw. Sektoren SE zu erkennen und zu selektieren, wird seine Qualifizierung bzw. Fähigkeit als Schweißer durch die Nutzer-Einstufungseinheit des Systems 1 automatisch niedrig eingestuft. Bei einer möglichen Ausführungsform werden Schweißfunktionen eines Schweißgerätes durch eine Steuerung 9 des Systems 1 entsprechend der durch die Nutzer-Einstufungseinheit vorgenommenen Einstufung des Nutzers bzw. Schweißers U für den entsprechenden Nutzer U automatisch freigegeben oder gesperrt. Für einen als hochqualifiziert eingestuften Nutzer U werden Schweißfunktionen freigegeben, während für einen als niedrig qualifiziert eingestuften Nutzer Schweißfunktionen gesperrt werden. Das Taggen der auf einer Anzeige der Nutzerschnittstelle 2 angezeigten Schweißnahtbilder SNB seitens des Nutzers U erfolgt bei einer möglichen Ausführungsform mittels Spracheingabe in einem akustischen Sensor bzw. Mikrophon der Nutzerschnittstelle 2. Beispielsweise kann der Nutzer diejenigen Sektoren bzw. Segmente SE akustisch benennen, die Schweißnahtfehler bzw. Schweißnahtunregelmäßigkeiten zeigen. Das Taggen der Schweißnahtbilder SNB durch Spracheingabe vereinfacht und beschleunigt das Taggen der Schweißnahtbilder SNB. Bei einer möglichen Ausführungsform befindet sich die Nutzer-Einstufungseinheit des Systems 1 auf einer Recheneinheit des Moduls 3, das in Fig. 1 dargestellt ist. Bei einer möglichen Ausführungsform erhält der Nutzer bzw. Schweißer U ein Feedback über die für ihn ermittelte Schweißer-Qualifizierung.

Neben Schweißnahtbildern SNB können an den Nutzer U auch andere Schweißnahtartefakte bzw. Schweißnahtdaten SND über die Nutzerschnittstelle 2 ausgegeben werden, insbesondere Schweißnahtdokumente. Beispielsweise kann einem Nutzer ein Dokument ausgegeben werden und gleichzeitig eine Frage hinsichtlich möglicher Schweißparameter gestellt werden, beispielsweise "Welche Werte haben Schweißparameter x und y?". Der Nutzer kann also die Anwendung anhand von Material, Schweißstrom, Schweißspannung, Drahtvorschubgeschwindigkeit zu definieren.

Eine zweite Möglichkeit besteht darin, ein Bild SNB oder eine Sounddatei über die Nutzerschnittstelle 2 anzuzeigen und mehrere Antwortmöglichkeiten zu bieten, die ein Nutzer U ähnlich wie bei einem Multiple-Choice-Test auswählen kann. Das Taggen der ausgegebenen Schweißnahtdaten SND kann somit in unterschiedlicher Weise individuell an das System 1 und den Nutzer U angepasst erfolgen. Verschiedene Tagging-Mechanismen können parallel eingesetzt werden. Bei einer bevorzugten Ausführungsform des erfindungsgemäßen Systems 1 dient das Taggen der ausgegebenen Schweißnahtdaten SND nicht nur zum Generieren der Trainingsdaten, sondern auch gleichzeitig zur Ermittlung einer Schweißerfähigkeit/Einstufung des betreffenden Nutzers U. Bei einer möglichen Ausführungsform erfolgt das Taggen der Schweißnahtdaten SND während eines Login- oder Registriervorganges. Bei jedem Login- und Registriervorgang kann die Qualifizierung des Nutzers neu eingestuft bzw. bewertet werden. Der Nutzer U hat so einen Anreiz, die Schweißnahtdaten SND gewissenhaft zu taggen.

Bei einer möglichen Ausführungsvariante werden Nutzer U in Form eines Spieles angehalten, möglichst viele Schweißnahtdaten SND zu taggen (gamification).

Bei dem in Fig. 1 dargestellten Ausführungsbeispiel umfasst das System 1 lediglich eine Nutzerschnittstelle 2 bzw. ein Nutzerterminal für einen Schweißer bzw. Nutzer U. Bei einer bevorzugten Ausführungsform kann eine Vielzahl von Nutzerterminals bzw. Nutzerschnittstellen 2 über ein Datennetzwerk mit dem Modul 3 verbunden sein, insbesondere über ein Datennetzwerk. Bei Vorhandensein einer Vielzahl von Nutzern bzw. Schweißern U, welche das erfindungsgemäße System 1 über einen längeren Zeitraum verwenden, kann ein umfangreicher Trainingsdatensatz TDS generiert werden, der sich dazu eignet, ein künstliches Intelligenz-Modul 6 in einem Maschinenlernprozess zu trainieren. Bei einer möglichen Ausführungsform wird das künstliche Intelligenz-Modul 6 des Systems 1 auf Basis einer Vielzahl von Schweißnahtdaten SND in einem Maschinenlernprozess auf Basis der generierten Trainingsdaten trainiert.

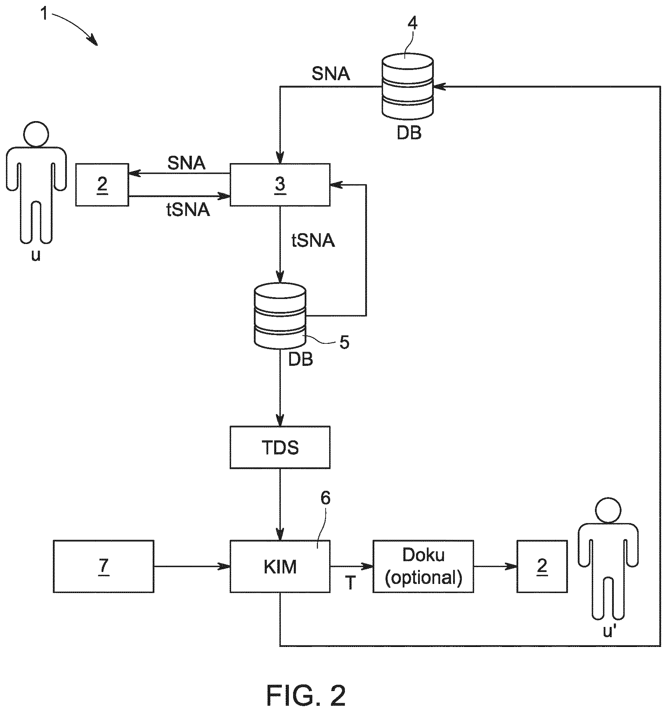

Fig. 2 zeigt eine Erweiterung des in Fig. 1 dargestellten Systems 1. Wie man in Fig. 2 erkennen kann, werden die in der Datenbank 5 abgelegten Trainingsdaten als Trainingsdatensatz TDS zum Trainieren eines künstlichen Intelligenz-Moduls 6 des Systems 1 herangezogen. Das trainierte künstliche Intelligenz-Modul 6 weist vorzugsweise ein trainiertes neuronales Netzwerk NN auf. Mit den getaggten Schweißnahtdaten tSND wird das künstliche neuronale Netzwerk trainiert. Das in dieser Weise trainierte künstliche neuronale Netzwerk kann neuen von einer Datenquelle 7 stammenden Input automatisch taggen bzw. mit Tags T versehen, die optional als Dokument über eine weitere Nutzerschnittstelle 2 an den gleichen oder einen weiteren Nutzer U des Systems 1 ausgegeben werden können. Bei diesem weiteren Nutzer U kann es sich beispielsweise um den Qualitätsmanager handeln. Der Dateninput wird vorzugsweise von einer Datenquelle 7 geliefert, insbesondere einem Bildsensor bzw. einer Kamera 7B. Die in Fig. 2 dargestellte Datenquelle 7 umfasst bei einer möglichen Ausführungsform einen Bildsensor 7B, der Schweißnahtbilder SNB oder Schweißnahtbildsequenzen einer zu klassifizierenden Schweißnaht SN, die während eines Schweißvorganges hergestellt wird, als Schweißnahtdaten SND bzw. Input an das mit dem Trainingsdatensatz TDS trainierte neuronale Netzwerk 6 liefert. Weiterhin kann die Datenquelle 7 bei einer möglichen Ausführungsform auch einen akustischen Sensor 7C umfassen, der während eines Schweißvorganges erfasste akustische Schweißaufnahmen als Schweißnahtdaten SND dem künstlichen Intelligenz-Modul 6 bzw. dem trainierten neuronalen Netzwerk 6 zuführt. Weiterhin kann die Datenquelle 7 auch einen Datenspeicher 7A aufweisen, welcher gespeicherte Schweißnahtoberflächenbilder (SNOB), Schweißnahtschliffbilder (SNSB), Schweißnahtbildsequenzen, akustische Schweißaufnahmen und/oder Schweißnahtdokumente dem künstlichen Intelligenz-Modul 6 als Schweißnahtdaten SND zur Klassifizierung der Schweißnaht SN bereitstellt.

Die Datenquelle 7 kann über eine drahtlose oder drahtgebundene Verbindung mit dem künstlichen Intelligenz-Modul 6 des Systems 1 verbunden sein. Bei einer möglichen Ausführungsform ist die Datenquelle 7 in einem tragbaren Gerät, beispielsweise einem Smartphone, integriert. Beispielsweise kann ein Schweißer U nach Herstellung einer Schweißnaht SN mithilfe einer Nutzerschnittstelle seines Handys Schweißnahtoberflächenbilder SNOB der Schweißnaht SN machen und dem künstlichen Intelligenz-Modul 6 zur Klassifizierung der Schweißnaht SN zuführen. Bei einer möglichen Ausführungsform kann das Klassifizierungsergebnis über die graphische Nutzerschnittstelle 2 des Smartphones wieder an den Nutzer U ausgegeben werden. Das Klassifizierungsergebnis kann bei einer möglichen Ausführungsform sowohl an den Schweißer als auch an weitere Personen ausgegeben werden, insbesondere Personen, welche für die Qualität des Herstellungsprozesses verantwortlich sind. Die von dem künstlichen Intelligenz-Modul 6 getaggten Inputdaten, welche von der Datenquelle 7 stammen, können optional in einem Dokumentationssystem gespeichert werden und/oder direkt an einen Nutzer U ausgegeben werden, der beispielsweise eine Qualitätskontrolle vornimmt. Bei einer möglichen Ausführungsform können Daten, welche durch das künstliche Intelligenz-Modul 6 nicht eindeutig klassifiziert bzw. getaggt werden können, einem Untagged-Archiv hinzugefügt werden, welches in der Datenbank DB des Systems 1 vorhanden ist.

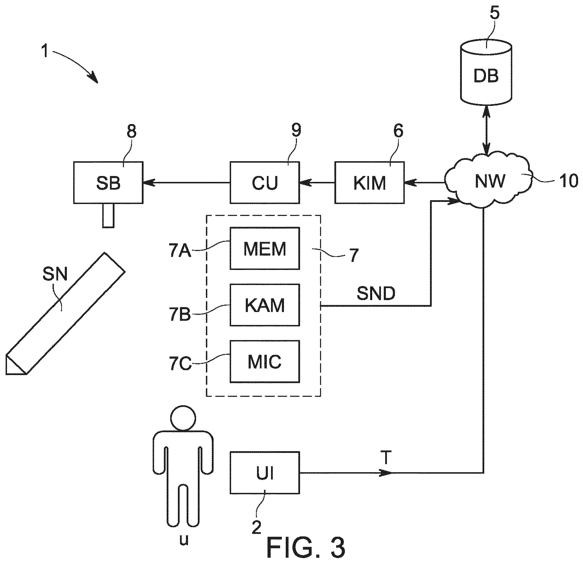

Fig. 3 zeigt ein Ausführungsbeispiel eines erfindungsgemäßen Systems 1 zur Klassifizierung einer Schweißnaht SN. Bei dem in Fig. 1 dargestellten System 1 werden mithilfe eines Schweißbrenners 8 in einem Herstellungsprozess eine Schweißnaht SN hergestellt. Eine oder mehrere Datenquellen 7 liefern Schweißnahtdaten SND über ein Netzwerk 10 an das trainierte künstliche Intelligenz-Modul 6, das die Schweißnaht SN anhand der bereitgestellten Schweißnahtinputdaten SND automatisch klassifiziert. Das Klassifizierungsergebnis wird von dem künstlichen Intelligenz-Modul 6, insbesondere dem trainierten neuronalen Netzwerk, an eine Steuerung 9 eines Schweißgerätes 11 ausgegeben, welche Schweißfunktionen des Schweißgerätes 11 in Abhängigkeit von dem Klassifizierungsergebnis automatisch steuert. Die Steuerung 9 des Schweißgerätes 11 kann beispielsweise den Schweißbrenner 8 während eines Schweißvorganges in Abhängigkeit von dem Klassifizierungsergebnis automatisch ansteuern. Bei einer möglichen Ausführungsform wird somit ein Aktuator, beispielsweise der in Fig. 3 dargestellte Schweißbrenner 8, anhand der während des Schweißvorganges generierten Schweißnahtdaten SND dynamisch gesteuert. Bei dem in Fig. 3 dargestellten Ausführungsbeispiel umfassen die Datenquellen 7 einen Datenspeicher 7A, eine Kamera 7B und/oder ein Mikrophon 7C. Die Datenquellen 7 können in der Produktionsumgebung des Schweißgerätes vorgesehen sein oder einen Teil des Schweißgerätes bilden. Bei der in Fig. 3 dargestellten Ausführungsform sind die Datenquellen 7 in dem Schweißgerät 11 integriert. Die Nutzerschnittstelle 2 kann ebenfalls in dem Schweißgerät 11 integriert sein oder, wie in Fig. 3 dargestellt, über ein Netzwerk 10 an das System 1 angebunden sein. Die Nutzerschnittstelle 2 ist beispielsweise ein Touchscreen eines Nutzergerätes, welches zum Taggen verwendet wird. Hierbei kann es sich um ein tragbares Gerät (z.B. Tablet) handeln oder ein Nutzerterminal. Während des Schweißvorganges können Kamerabilder bzw. Tonaufnahmen als Schweißnahtdaten SND über das Datennetzwerk 8 dem trainierten künstlichen Intelligenz-Modul 6 zugeführt werden, das Klassifizierungsergebnisse liefert, die durch die Steuerung 9 des Schweißgerätes 11 beim Steuern des aktuellen Schweißprozesses berücksichtigt werden. Das künstliche Intelligenz-Modul 6 kann während und/oder nach Abschluss eines Schweißprozesses eine Schweißnaht SN bei einer möglichen Ausführungsform automatisch als fehlerfrei oder fehlerbehaftet klassifizieren. Die Kamera 7B ist vorzugsweise auf die Schweißnaht SN gerichtet. Bei einer möglichen Implementierung ist die Kamera 7B beweglich montiert und wird während des Schweißprozesses entlang der Schweißnaht SN geführt oder entsprechend ausgerichtet. Eine als fehlerhaft klassifizierte Schweißnaht SN kann nach ihrer Herstellung dazu führen, dass der Schweißprozess wiederholt wird bzw. das hergestellte Bauteil als Ausschuss aussortiert wird. Die von einem Nutzer U gelieferten Tags T können sich auf unterschiedlichste Eigenschaften der Schweißnaht SN beziehen, beispielsweise fehlerhaftes Schweißnahtstellen, Anzahl von Lagen im Schliffbild SNSB der Schweißnaht SN, die Form der Schweißnaht SN, auftretende Schweißspritzer, Schweißnahtfehlerarten bzw. Schweißnahtfehlertypen, Schweißparameter, beispielsweise die Anzahl von Lagen, Schweißstrom oder Schweißspannung, sowie fehlerhafte Schweißvorbereitungsmaßnahmen.

Bei einer möglichen Ausführungsform befindet sich das künstliche Intelligenz-Modul 6 integriert in einer Recheneinheit 12 des Schweißgerätes 11. Alternativ kann das künstliche Intelligenz-Modul 6 auch auf einem Server integriert sein, welcher über das Netzwerk mit der Steuerung 9 des Schweißgerätes 11 verbunden ist. Bei einer möglichen Ausführungsform befindet sich das trainierte künstliche Intelligenz-Modul 6 auf einem Server einer Cloud Platform, die über das Internet und einer Datenschnittstelle mit der Steuerung 9 des Schweißgerätes 11 verbunden ist. Bei einer möglichen Ausführungsform erfolgt die Klassifizierung einer hergestellten Schweißnaht SN nach deren Herstellung, um beispielsweise fehlerhafte Schweißnähte SN nachzubessern bzw. fehlerhafte Bauteile auszusortieren. Bei einer alternativen Ausführungsform kann die Klassifizierung der Schweißnaht SN auch "on the fly" in Echtzeit ausgeführt werden, um noch während des fortlaufenden Schweißprozesses steuernd bzw. regelnd in den Schweißvorgang eingreifen zu können. Die während des Schweißvorganges erzeugten Schweißnahtdaten SND können bei einer möglichen Ausführungsform den vorhandenen Trainingsdatensatz TDS erweitern und zum weiteren Training des künstlichen Intelligenz-Moduls 6 verwendet werden. Hierdurch wird die Performance des künstlichen Intelligenz-Moduls 6 fortlaufend gesteigert.

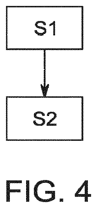

Fig. 4 zeigt ein Ablaufdiagramm einer möglichen Ausführungsform des erfindungsgemäßen Verfahrens zum Klassifizieren einer Schweißnaht SN.

In einem ersten Schritt S1 werden Schweißnahtdaten SND der zu klassifizierenden Schweißnaht SN bereitgestellt, die während eines Schweißvorganges erzeugt werden.

In einem weiteren S2 wird die Schweißnaht SN durch ein trainiertes künstliches Intelligenz-Modul 6 anhand der bereitgestellten Schweißnahtdaten SND automatisch klassifiziert.

In einem weiteren (nicht dargestellten) Schritt wird anhand des Klassifizierungsergebnisses der Schweißprozess durch eine Steuerung 9 eines Schweißgerätes 11 gesteuert bzw. das hergestellte Schweißnahtprodukt entsprechend dem Klassifizierungsergebnis sortiert.

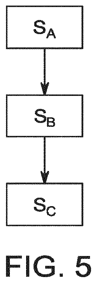

Fig. 5 zeigt ein weiteres Ablaufdiagramm zur Darstellung einer möglichen Ausführungsform eines erfindungsgemäßen Verfahrens zum Generieren von Trainingsdaten, welche zum Trainieren eines künstlichen Intelligenz-Moduls 6 nutzbar sind.

Bei dem in Fig. 5 dargestellten Ausführungsbeispiel werden in einem ersten Schritt S_{A} Schweißnahtdaten SND mittels einer Nutzerschnittstelle 2 an mindestens einen Nutzer, insbesondere einen Schweißer U, ausgegeben.

In einem weiteren Schritt S_{B} werden die ausgegebenen Schweißnahtdaten SND durch den Nutzer U mit Tags T versehen.

In einem weiteren Schritt S_{C} werden die mit Tags T versehenen Schweißnahtdaten SND in einer Datenbank bzw. einem Datenspeicher 4 gespeichert. Der auf dieser Weise generierte Trainingsdatensatz TDS wird in einem weiteren nicht dargestellten Schritt zum Trainieren eines künstlichen Intelligenz-Moduls 6 herangezogen.

Das derart trainierte künstliche Intelligenz-Modul 6 kann bei einer möglichen Ausführungsform in einem Schweißgerät 11 integriert werden. Bei einer möglichen Ausführungsform können verschiedene Hersteller von verschiedenen Produktionsstätten die von ihnen generierten Trainingsdaten in einem gemeinsamen Trainingsdatensatz TDS poolen. Der gepoolte Trainingsdatensatz TDS kann beispielsweise in einen Zwischenspeicher abgelegt werden, wie in Fig. 2 dargestellt. Dieser umfangreiche Trainingsdatensatz TDS wird zum Trainieren eines künstlichen Intelligenz-Moduls 6, insbesondere eines neuronalen Netzwerks, mit hoher Leistungsfähigkeit bzw. Performance verwendet. Das künstliche Intelligenz-Modul 6 kann sich in einem Webserver einer Cloud Platform befinden, auf die verschiedene Nutzer und/oder Hersteller nach entsprechender Authentisierung Zugriff haben.

Bei einer möglichen Ausführungsform weist das System mehrere künstliche Intelligenzmodule 6 auf, die mit Hilfe verschiedener Trainingsdatensätze TDS spezifisch trainiert sind und sich jeweils für bestimmte Inputdaten unterschiedlicher Datenquellen 7 eignen. Beispielsweise ist ein erstes trainiertes neuronales Netzwerk 6-1 zum Klassifizieren eines zweidimensionalen Kamerabildes vorgesehen, das von einer Kamera 7B stammt, während ein zweites trainiertes neuronales Netzwerk 6-2 zum Klassifizieren von akustischen Daten vorgesehen ist, die von einem Mikrophon 7C stammen. Die verschiedenen neuronalen Netzwerke 6-i können unterschiedlicher Art sein und unterschiedliche Layer aufweisen. Beispielsweise kann es sich bei dem ersten neuronalen Netzwerk 6-1 für die Klassifizierung von Kameradaten um ein CNN (Convolutional Neural Network) handeln, während das zweite neuronale Netzwerk 6-2 ein RNN (Recurrent Neural Network) ist. Die Klassifizierungsergebnisse der verschiedenen künstlichen Intelligenzmodule 6 können kombiniert werden, um ein Gesamtklassifizierungsergebnis zu berechnen.

## Patentansprüche

1. System (1) zur Klassifizierung einer Schweißnaht (SN) mit mindestens einer Datenquelle (7) zur Bereitstellung von Schweißnahtdaten (SND) der Schweißnaht (SN) und mit mindestens einem trainierten künstlichen Intelligenz-Modul (6), das die Schweißnaht (SN) anhand der bereitgestellten Schweißnahtdaten (SND) automatisch klassifiziert.

2. System nach Anspruch 2, wobei das künstliche Intelligenz-Modul (6) ein trainiertes neuronales Netzwerk aufweist.

3. System nach Anspruch 1 oder 2,
wobei die zu klassifizierende Schweißnaht (SN) durch ein Schweißgerät (11) des Systems (1) in einem Schweißvorgang hergestellt wird und während des Schweißvorganges und/oder nach Abschluss des Schweißvorganges klassifiziert wird.

4. System nach einem der vorangehenden Ansprüche 1 bis 3, wobei die Datenquelle (7)
einen Bildsensor (7B), der Schweißnahtbilder oder Schweißnahtbildsequenzen der zu klassifizierenden Schweißnaht (SN) während eines Schweißvorganges als Schweißnahtdaten (SND) liefert und/oder
einen akustischen Sensor (7C), der während eines Schweißvorgangs erfasste akustische Schweißaufnahmen als Schweißnahtdaten (SND) bereitstellt und/oder
einen Datenspeicher (7A) aufweist, der gespeicherte Schweißnahtoberflächenbilder, Schweißnahtschliffbilder, Schweißnahtbildsequenzen, akustische Schweißaufnahmen und/oder Schweißnahtdokumente dem künstlichen Intelligenz-Modul (6) als Schweißnahtdaten (SND) zur Klassifizierung der Schweißnaht (SN) bereitstellt.

5. System nach einem der vorangehenden Ansprüche 1 bis 4,
wobei die durch ein Schweißgerät (11) hergestellte Schweißnaht (SN) anhand von bereitgestellten Schweißnahtdaten (SND) der Schweißnaht (SN) durch das künstliche Intelligenz-Modul (6) während und/oder nach Abschluss eines Schweißprozesses automatisch als fehlerfrei oder fehlerbehaftet klassifiziert wird.

6. System nach einem der vorangehenden Ansprüche 1 bis 5,
wobei ein Schweißprozess zur Herstellung der Schweißnaht (SN) durch eine Steuerung (9) des Schweißgerätes (11) in Abhängigkeit des von dem mindestens einen künstlichen Intelligenz-Modul (6) ausgegebenen Klassifizierungsergebnisses hinsichtlich der Schweißnaht (SN) gesteuert wird.

7. System nach einem der vorangehenden Ansprüche 1 bis 6,
wobei die Schweißnahtdaten (SND) Schweißnahtbilder (SNB) der Schweißnaht (SN) aufweisen, welche eine Oberfläche der Schweißnaht (SN) und/oder mindestens einen Querschnitt durch die eine geschliffene Schweißnaht (SN) und/oder eine fehlende Schweißnaht (SN) darstellen.

8. System nach einem der vorangehenden Ansprüche 1 bis 7,
wobei das künstliche Intelligenz-Modul (6) auf Basis einer Vielzahl von Schweißnahtdaten (SND) in einem Maschinenlernprozess trainiert ist.

9. System nach einem der vorangehenden Ansprüche 1 bis 8,
wobei die mindestens eine Datenquelle (7) Schweißnahtdaten (SND) - getaggt - liefert, die in einer Datenbank (4) des Systems (1) gespeichert und zum Trainieren des künstlichen Intelligenz-Moduls (6) aus der Datenbank (4) ausgelesen werden.

10. System nach einem der vorangehenden Ansprüche 1 bis 9,
wobei Schweißnahtdaten (SND) durch einen Nutzer (U) mittels einer Nutzerschnittstelle (2) des Systems (1) mit einem oder mehreren Tags (T) versehen werden und die entsprechend markierten getaggten Schweißnahtdaten (SND) in einer Datenbank (4) des Systems (1) zum Trainieren des künstlichen Intelligenz-Moduls (6) gespeichert werden.

11. System nach Anspruch 10,
wobei das Taggen der Schweißnahtdaten (SND) in einem Login- oder Registriervorgang erfolgt, indem sich der Nutzer (U) über die Nutzerschnittstelle (2) bei dem System (1) anmeldet.

12. System nach einem der vorangehenden Ansprüche 10 oder 11,
wobei ein Datensatz der Schweißnahtdaten (SND) jeweils mehrere Segmente (SE) aufweisen, die über die Nutzerschnittstelle (2) des Systems (1) an den Nutzer (U) optisch und/oder akustisch ausgegeben werden,
wobei das Taggen der Schweißnahtdaten (SND) erfolgt, indem diejenigen Segmente (SE) der ausgegebenen Schweißnahtdaten (SND), die eine oder mehrere vorgegebene Eigenschaften der Schweißnaht (SN) widerspiegeln, mittels der Nutzerschnittstelle (2) durch den Nutzer (U) selektiert werden.

13. System nach Anspruch 12,
wobei Segmente (SE) der ausgegebenen Schweißnahtdaten (SND) anhand vorhandener Schweißfehlerstellen, Schweißnahtformfehlern, auftretender Schweißspritzer, Spaltmaßfehlern und/oder anhand eingestellter Schweißparametern getaggt werden.

14. System nach einem der vorangehenden Ansprüche 12 oder 13,
wobei seitens des Nutzers (U) an den Schweißnahtdaten SND vorgenommenen Selektionen zur Einstufung einer Schweißer-Qualifizierung des Nutzers (U) durch eine Nutzer-Einstufungseinheit des Systems (1) automatisch ausgewertet werden.

15. System nach Anspruch 14,
wobei Schweißfunktionen eines Schweißgerätes (11) durch dessen Steuerung (9) entsprechend der durch die Nutzer-Einstufungseinheit vorgenommenen Einstufung des Nutzers (U) für den entsprechenden Nutzer automatisch freigegeben oder gesperrt werden.

16. System nach einem der vorangehenden Ansprüche 1 bis 15,
wobei das Taggen von auf einer Anzeige der Nutzerschnittstelle (2) angezeigten Schweißnahtdaten (SND) seitens des Nutzers (U) mittels Spracheingabe in einen akustischen Sensor der Nutzerschnittstelle (2) erfolgt.

17. Verfahren zum Klassifizieren einer Schweißnaht (SN) mit den Schritten:
(a) Bereitstellen (S1) von Schweißnahtdaten (SND) der zu klassifizierenden Schweißnaht (SN), die während eines Schweißvorgangs erzeugt werden,
(b) Klassifizieren (S2) der Schweißnaht (SN) durch ein trainiertes künstliches Intelligenz-Modul (6) anhand der bereitgestellten Schweißnahtdaten (SND).

18. Verfahren nach Anspruch 17,
wobei das Klassifizieren (S2) der Schweißnaht (SN) durch das trainierte künstliche Intelligenz-Modul (6) anhand von gespeicherten Schweißnahtdaten (SND) erfolgt.

19. Verfahren nach Anspruch 17, wobei das Klassifizieren der Schweißnaht (SN) in Echtzeit während eines Schweißprozesses zur Herstellung der Schweißnaht (SN) erfolgt und/oder wobei das Klassifizieren der Schweißnaht (SN) nach Abschluss eines Schweißprozesses zur Herstellung der Schweißnaht (SN) erfolgt.
